# EUROPÄISCHE PATENTSCHRIFT

(11) **EP 1 190 810 B1**
(45) Veröffentlichungstag und Bekanntmachung des Hinweises auf die Patenterteilung: **26.11.2003**
(21) Anmeldenummer: 01118791.1
(22) Anmeldetag: 09.08.2001
(51) Int. Cl.: B23P 15/10

(54) **Verfahren zur Herstellung eines Kolbens**
Method of manufacturing a piston
Procédé pour la fabrication d'un piston

(30) Priorität: 13.09.2000 DE 10045174
(43) Veröffentlichungstag der Anmeldung: 27.03.2002
(73) Patentinhaber: Federal-Mogul Nürnberg GmbH, 90441 Nürnberg (DE)
(72) Erfinder: Otte, Bernhard, Dr. Dipl.-Phys., 90513 Zirndorf (DE); Konrad, Peter, Dipl.-Ing., 91257 Pegnitz (DE); Wallmann, Clemens, 91052 Erlangen (DE); Waldmann, Hans Werner, 91052 Erlangen (DE); Bergmann, Hans Wilhelm, Prof. Dr., 95494 Gesees (DE)
(74) Vertreter: HOFFMANN - EITLE

(56) Entgegenhaltungen:
- EP-A- 0 820 831
- DE-C- 19 833 827
- US-A- 3 014 771
- US-A- 4 233 490

## Beschreibung

### Technisches Gebiet

Die Erfindung betrifft ein Verfahren zur Herstellung eines Kolbens für einen Verbrennungsmotor, der zumindest eine armierte Kolbenringnut aufweist.

Insbesondere bei hochbelasteten Kolben sowohl von Diesel- als auch von Ottomotoren ist die Belastung der obersten Kolbenringnut besonders hoch. Aus diesem Grund ist eine spezielle Verstärkung dieser Kolbenringnut durch besonders verschleißfeste Materialien erforderlich.

### Stand der Technik

Aus der EP 0 654 596 A1 ist es bekannt, in einen Kolbenkörper einen Ring aus einer Eisen-Basislegierung einzugießen und anschließend aus diesem Ring die Kolbenringnut herauszuarbeiten.

Alternativ ist es bekannt, die Nut aus dem Material des Kolbenschaftes herauszuarbeiten und die Nutenflanken nachfolgend durch geeignete Prozesse mit guten Verschleißeigenschaften zu versehen. Hierbei ist es beispielsweise bekannt, durch galvanische Prozesse eine Hartanodisierung auszubringen. In diesem Fall werden jedoch hohe Kosten durch die Entsorgung des eisenhaltigen Alfins und durch die verbrauchten Chemikalien sowie durch die erforderlichen Arbeitsprozesse selbst verursacht.

Aus der DE 198 33 827 C1 ist die Ausbildung einer aus keramischen Material bestehenden Bewehrung im Bereich der Nutenflanken bekannt, die jedoch ebenfalls vergleichsweise aufwendig ist.

Die DE 34 05 983 C1 beschreibt das Aufschweißen von austenitischen Hartmanganstahl auf die Flanken der Kolbenringnuten. Bei einem derartigen Verfahren wird der Kolben jedoch vergleichsweise stark durch die entstehende Wärme belastet. Ferner ist eine vergleichsweise große Menge an Armierungs- oder Zusatzwerkstoffen erforderlich.

Aus der US 3,014,771 ist ein Verfahren zur Herstellung eines Kolbens für einen Verbrennungsmotor bekannt, bei dem eine Nut, die größer ist als eine zukünftige Kolbenringnut, ausgebildet wird. Nachfolgend wird durch Autogen- oder Lichtbogenschweißen die Nut mit abriebswiderstandsfähigem Material gefüllt. Schließlich wird eine Kolbenringnut so herausgearbeitet, dass die beiden Flanken der Kolbenringnut durch das abriebswiderstandsfähige Material gebildet werden.

### Darstellung der Erfindung

Der Erfindung liegt die Aufgabe zugrunde, ein Verfahren zu schaffen, mit dem ein Kolben für einen Verbrennungsmotor, der zumindest eine armierte Kolbenringnut aufweisen soll, mit geringem Aufwand hergestellt werden kann.

Die Lösung dieser Aufgabe erfolgt durch das im Patentanspruch 1 beschriebene Verfahren.

Demzufolge wird an einem Kolben für einen Verbrennungsmotor eine armierte Kolbenringnut dadurch ausgebildet, dass zunächst zumindest eine, vorzugsweise zwei vergleichsweise schmale Nuten im Bereich der oberen und/oder unteren Flanke der vorgesehenen Kolbenringnut ausgebildet werden. Insbesondere können diese Nuten eingestochen werden. Zwischen den beiden Nuten oder in der Umgebung der einen Nut verbleibt ein Steg aus dem Grundwerkstoff, der, wie nachfolgend beschrieben, noch entfernt wird.

Nach dem Ausbilden der Nut(en) an denjenigen Stellen, an denen die obere und/oder untere Flanke der Kolbenringnut vorgesehen ist, werden diese Nut(en) bevorzugt mittels eines einstufigen Beschichtungsverfahrens mit einem verschleißfesten Material gefüllt. Schließlich wird die Kolbenringnut derart aus dem Kolben herausgearbeitet, dass die obere und/oder untere Flanke der Kolbenringnut von dem verschleißfesten Material gebildet wird. Mit anderen Worten wird im Rahmen des letzten Schrittes der zwischen den vergleichsweise schmalen Nuten verbleibende Steg aus Grundwerkstoff sowie ein Teil der jeweiligen Füllung des verschleißfesten Materials entfernt. An der oberen und/oder unteren Flanke der in dieser Weise ausgebildeten Kolbenringnut verbleibt ein Teil der Füllung, die aus verschleißfestem Material besteht, so dass die zumindest eine Flanke der Nut aus einem Werkstoff besteht, mit dessen Hilfe diejenigen Anforderungen erfüllt werden, die an die Flanken der Kolbenringnut gestellt werden.

Das erfindungsgemäße Verfahren bietet den Vorteil, dass eine geringere Wärmebelastung des Kolbens auftritt, als dies bei dem bekannten Auftragschweißen der Fall ist. Ferner kann dadurch, dass lediglich vergleichsweise schmale Nuten mit den Armierungs- oder Zusatzwerkstoff gefüllt werden, eine geringere Menge dieses Werkstoffs verwendet werden. Hierfür ist aufgrund des geringeren Füllvolumens ferner eine geringere Bearbeitungszeit erforderlich. Verglichen mit dem Eingießen eines Ringes aus verschleißfestem Material in einen Grundkörper aus dem Grundwerkstoff und dem nachfolgenden Herausarbeiten der Nut aus dem eingegossenen Ring ist ebenfalls ein geringerer Materialeinsatz erforderlich. Schließlich bleiben der Verbrauch an Armierungswerkstoff, die Bearbeitungszeit und sonstige Prozessparameter gleich, unabhängig davon, wie die Ringnutgeometrie und die Ringnutbreite gestaltet werden. Mit anderen Worten können diejenigen Stellen, an denen die vergleichsweise schmalen Nuten ausgebildet werden, sowie deren Geometrie ebenso wie die Geometrie der nachfolgend herausgearbeiteten Kolbenringnut frei gewählt werden, ohne dass sich hierdurch das erfindungsgemäße Verfahren nennenswert verändert oder verkompliziert.

Wenngleich die Verwendung eines Mikrosprühens für die Füllung der Nut(en) sowie die Verwendung einer Plasmaquelle denkbar ist, wird der Schritt des Füllens der in dem Grundkörper ausgebildeten, vergleichsweise schmalen Nut(en) erfindungsgemäß mittels einer Laserquelle durchgeführt. Mit diesen Bearbeitungsschritten kann bei geringem Aufwand eine vorteilhafte Füllung mit verschleißfestem Material erreicht werden.

Für den Schritt des Füllens wird bevorzugt ein draht- oder pulverförmiger Werkstoff verwendet. Derartige Werkstoffe lassen sich besonders gut handhaben, so dass in diesem Fall eine besonders einfache Variante des erfindungsgemäßen Verfahrens geschaffen wird.

### Kurze Beschreibung der Zeichnungen

Nachfolgend wird die Erfindung anhand eines in den Zeichnungen dargestellten Ausführungsbeispiels näher erläutert. Es zeigen:
- Figur 1: einen Teil des mit dem erfindungsgemäßen Verfahren hergestellten Kolbens nach einem ersten Verfahrensschritt;
- Figur 2: einen Teil des mit dem erfindungsgemäßen Verfahren hergestellten Kolbens nach einem zweiten Verfahrensschritt; und
- Figur 3: einen Teil eines mittels des erfindungsgemäßen Verfahrens hergestellten Kolbens.

### Ausführliche Beschreibung einer bevorzugten Ausführungsform der Erfindung

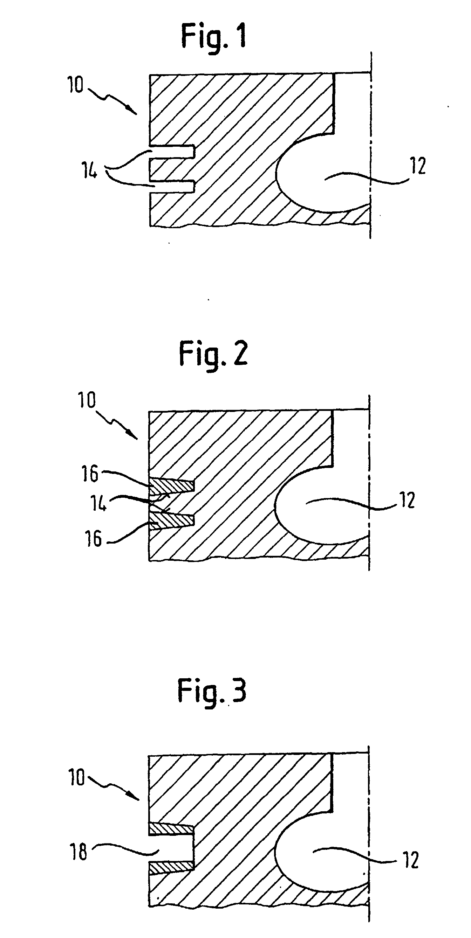

Figur 1 zeigt in einer Schnittansicht einen Teil eines Kolbens, an dem mittels des erfindungsgemäßen Verfahrens eine armierte Kolbenringnut ausgebildet werden soll. Es ist eine Hälfte des Kolbens in einem oberen Teil desselben zu erkennen. Insbesondere weist der Kolben eine Brennraummulde 12 auf. Zur Ausbildung einer armierten Kolbenringnut mit Hilfe des erfindungsgemäßen Verfahrens werden in einem ersten Schritt zwei vergleichsweise schmale Nuten 14 umlaufend an denjenigen Stellen ausgebildet, an denen die obere und untere Flanke der Kolbenringnut vorgesehen ist. Die Nuten 14 können beispielsweise eingestochen werden.

In Figur 2 ist der gleiche Teil des Kolbens 10 wie in Figur 1 nach einem zweiten Verfahrensschritt zu erkennen. Die beiden vergleichsweise schmalen Nuten 14 wurden mit einem verschleißfesten Material 16 gefüllt. Dies kann mittels einer Plasmaquelle sowie durch Mikrosprühen durchgeführt werden, erfolgt erfindungsgemäß jedoch durch eine Laserquelle. Der vergleichsweise verschleißfeste Werkstoff 16 kann im Ausgangszustand draht- oder pulverförmig vorliegen.

Wie in Figur 3 zu erkennen ist, wird aus dem Material 16 sowie aus dem zwischen den beiden Nuten 14 verbleibenden Steg aus dem Grundmaterial des Kolbens die armierte Kolbenringnut 18 herausgearbeitet. Dieser Verfahrensschritt erfolgt derart, das sowohl die obere als auch die untere Flanke der Kolbenringnut 18 an einer Stelle ausgebildet wird, an der sich das vergleichsweise verschleißfeste Material 16 befindet. Hierdurch weisen die Nutenflanken gute Verschleißeigenschaften auf. Die Erfindung bietet den Vorteil, dass eine in dieser Weise ausgebildete Kolbenringnut mit relativ wenig verschleißfestem Material 16 ausgebildet werden kann, da lediglich die beiden schmalen Nuten 14 damit gefüllt werden müssen. Ferner tritt eine geringere Wärmebelastung des Kolbens als während des herkömmlichen Auftragsschweißens auf. Schließlich werden die Bearbeitungszeiten zur Ausbildung der armierten Kolbenringnut 18 erheblich verringert.

## Patentansprüche

1. Verfahren zur Herstellung eines Kolbens (10) für einen Verbrennungsmotor mit zumindest einer armierten Kolbenringnut (18) mit folgenden Schritten:
- Ausbildung von zumindest einer vergleichsweise schmalen Nut (14) im Bereich der oberen und/oder unteren Flanke der vorgesehenen Kolbenringnut (18);
- Füllen der Nut (14) mit einem verschleißfesten Material (16) mittels einer Laserquelle, und
- Herausarbeiten einer Kolbenringnut (18) derart, dass die obere und/oder untere Flanke der Kolbenringnut (18) zumindest teilweise von dem verschleißfesten Material (16) gebildet wird.

2. Verfahren nach Anspruch 1, **dadurch gekennzeichnet, dass** das Füllen der Nut (14) mittels eines draht- oder pulverförmigen Werkstoffs durchgeführt wird.

## Claims

1. Method for producing a piston (10) for an internal combustion engine having at least one reinforced piston ring groove (18) by means of the following steps:
- construction of at least one comparatively narrow groove (14) in the region of the upper and/or lower flank of the planned piston ring groove (18);
- filling the groove (14) with a wear-resistant material (16) by means of a laser source; and
- cutting out a piston ring groove (18) in such a way that the upper and/or lower flank of the piston ring groove (18) is formed at least in part by the wear-resistant material (16) .

2. Method according to Claim 1, **characterised in that** the filling of the groove (14) is carried out by means of a wire-shaped or powdered material.

## Revendications

1. Procédé de fabrication d'un piston (10) pour un moteur à combustion interne, avec au moyen une gorge pour segment de piston (18) armée, le procédé comprenant les étapes ci-après :
- réalisation d'au moins une gorge (14) relativement étroite dans la zone du flanc supérieur et/ou inférieur de la gorge pour segment de piston prévue;
- remplissage de la gorge (14) avec un matériau (16) résistant à l'usure, à l'aide d'une source laser, et
- usinage de creusement d'une gorge pour segment de piston (18), de manière que le flanc supérieur et/ou inférieur de la gorge pour segment de piston (18) soit formé au moins partiellement par le matériau (16) résistant à l'usure.

2. Procédé selon la revendication 1, **caractérisé en ce que** le remplissage de la gorge (14) est effectué au moyen d'un matériau se présentant sous forme de fil ou de poudre.
